# EUROPÄISCHE PATENTSCHRIFT

(11) **EP 1 543 225 B1**
(45) Veröffentlichungstag und Bekanntmachung des Hinweises auf die Patenterteilung: **13.10.2010**
(21) Anmeldenummer: 03798039.8
(22) Anmeldetag: 02.06.2003
(51) Int. Cl.: F01N 3/20, F01N 3/035, F01N 3/021

(54) **ABGASREINIGUNGSANLAGE EINER BRENNKRAFTMASCHINE UND VERFAHREN ZUR REINIGUNG DEREN ABGASE**
EXHAUST GAS PURIFICATION SYSTEM OF AN INTERNAL COMBUSTION ENGINE AND METHOD FOR PURIFYING THE EXHAUST GASES THEREOF
INSTALLATION D'EPURATION DES GAZ D'ECHAPPEMENT D'UN MOTEUR A COMBUSTION INTERNE ET PROCEDE D'EPURATION DESDITS GAZ D'ECHAPPEMENT

(30) Priorität: 18.09.2002 DE 10243270
(43) Veröffentlichungstag der Anmeldung: 22.06.2005
(73) Patentinhaber: ROBERT BOSCH GMBH, 70442 Stuttgart (DE)
(72) Erfinder: SCHALLER, Johannes, 71229 Leonberg (DE); LUEDERS, Hartmut, 71720 Oberstenfeld (DE); WALZ, Christian, 71229 Loenberg (DE); MAYER, Thorsten, 67551 Worms (DE); RIPPER, Wolfgang, 70327 Stuttgart (DE)
(86) Internationale Anmeldenummer: PCT/DE2003/001800
(87) Internationale Veröffentlichungsnummer: WO 2004/029423

(56) Entgegenhaltungen:
- WO-A-99/39809
- DE-A- 4 214 183
- DE-A- 19 924 215
- US-A1- 2003 014 194
- US-B1- 6 293 097
- PATENT ABSTRACTS OF JAPAN vol. 1995, no. 07, 31. August 1995 (1995-08-31) & JP 07 100335 A (NIPPON OIL CO LTD), 18. April 1995 (1995-04-18)

## Beschreibung

Die Erfindung betrifft eine Abgasreinigungsanlage einer Brennkraftmaschine mit einer Vorrichtung zur selektiven katalytischen Reduktion. Die Erfindung betrifft ferner ein Verfahren zur Reinigung von Abgasen einer Brennkraftmaschine, bei dem ein Abgasstrom durch eine Vorrichtung zur selektiven katalytischen Reduktion geleitet wird.

### Stand der Technik

Zur Minderung der Stickoxidanteile in sauerstoffreichem Abgas, wie es insbesondere von Dieselbrennkraftmaschinen und von Brennkraftmaschinen mit Benzin-Direkteinspritzung emittiert wird, ist es bekannt, ein, Reduktionsmittel in einen Abgastrakt einzuführen, siehe beispielsweise US 6,293097 B1, DE 4 214 183 A1 und WO 99/39809 A1. Als Reduktionsmittel eignet sich bspw. NH₃, das als Gas in den Abgasstrom eingebracht werden kann. Bei dieser sog. selektiven katalytischen Reduktion (SCR, "selective catalytic reduction") wird das Ammoniak mit den im Abgas enthaltenen Stickoxiden selektiv zu molekularem Stickstoff und Wasser umgesetzt.

Als problematisch ist die ungenügende Aktivität des bekannten SCR-Systems bei Abgastemperaturen unterhalb ca. 250°C anzusehen. Eine Vorschaltung eines Oxidationskatalysators sorgt einerseits für eine Minderung der Anteile an deaktivierend wirkenden Kohlenwasserstoffen und andererseits für eine Oxidation von NO zu NO₂, was insgesamt zu einer deutlichen Steigerung des NOₓ-Umsatzes bei Abgastemperaturen oberhalb von ca. 200°C führt. Insbesondere beim Einsatz in PKW treten allerdings Phasen mit derart niedrigen Abgastemperaturen relativ häufig auf, was eine mittlere Katalysatortemperatur von weniger als 180°C im bekannten MVEG-Testzyklus (MVEG: Motor Vehicles Emissions Expert Group; eine Expertengruppe der Europäischen Kommision) verdeutlicht.

Um eine gute Verteilung des Reduktionsmittels auf den SCR-Katalysator zu gewährleisten, kann eine Mischstrecke von ca. 40 cm vorgesehen sein, die ggf. mit einer Mischeinrichtung versehen ist. Eine derartige Mischeinrichtung für eine Abgasreinigungsanlage ist in der älteren deutschen Patentanmeldung mit dem Aktenzeichen 101 31 803.0 beschrieben. Hierbei weist ein im Abgasrohr angeordneter Mischkörper eine Gasaufprallfläche sowie eine Strahlaufprallfläche auf, so dass aus der Brennkraftmaschine strömendes Abgas auf die Gasaufprallfläche und quer zum Abgasstrom zuführbares Reduktionsmittel auf die Strahlaufprallfläche treffen kann.

### Vorteile der Erfindung

Eine gemäß der Erfindung konfigurierte Abgasreinigungsanlage umfasst wenigstens einen in einem Abgaskanal einer Brennkraftmaschine angeordneten Oxidationskatalysator und wenigstens eine diesem nachgeordnete Vorrichtung zur selektiven katalytischen Reduktion der Abgase. Die Abgasreinigungsanlage umfasst weiterhin eine Zuführvorrichtung zur Einspeisung und Zumischung von Reduktionsmittel in den Abgasstrom vor bzw. in die Vorrichtung zur selektiven katalytischen Reduktion (SCR-Katalysator). Erfindungsgemäß weist die Abgasreinigungsanlage eine Umschaltvorrichtung und/oder eine weitere Zuführvorrichtung auf zur wahlweisen Zuführung von Reduktionsmittel in den Abgasstrom vor dem bzw. innerhalb des wenigstens einen Oxidationskatalysators. Mit einer solchen Konfiguration des Oxidations- sowie des sogenannten SCR-Katalysators kann eine Reduzierung der NOₓ-Emissionsgrenzwerte unter eine Menge an emittiertem NOₓ erreicht werden, die die Einhaltung der zulässigen Abgasnormen während des MVEG-Testzyklus gewährleistet. Eine solche Reduzierung der NOₓ-Emissionen kann dadurch erreicht werden, dass der bereits vorhandene und zur Stickstoffoxidoxiation verwendete temperaturbeständige Oxidationskatalysator während einer Kaltstartphase zusätzlich zur NOₓ-Reduktion herangezogen wird. Bei einer motornahen Einbaulage hat der Oxidationskatalysator bereits nach etwa 50 Sekunden eine Temperatur von mehr als 100 °C erreicht, was für eine NOₓ-Reduktion mittels NH₃ oder einem NH₃ abspaltenden Reduktionsmittel ausreichend ist. Oxidationskatalysatoren weisen als Aktivkomponente hauptsächlich Edelmetalle wie Platin auf. Dadurch werden Oxidationsreaktionen von Kohlenwasserstoffen, Kohlenmonoxid und Stickstoffmonoxid bereits bei niedrigen Temperaturen begünstigt. Wird NH₃ als Reduktionsmittel eingedüst, zeigen diese Katalysatoren bereits bei Temperaturen unterhalb von 100 °C eine relativ starke De-NOₓ-Aktivität.

Die Umschaltvorrichtung anstatt einer separaten Zuführvorrichtung für den Oxidationskatalysator reduziert den Bauaufwand US 6,293,097 B1 offenbart zwei separate und getrennt ansteuerbare Zuführeinrichtungen für Reduktionsmittel.

Die Umschaltvorrichtung zur wahlweisen Zuführung des Reduktionsmittels in den Abgasstrom vor bzw. in den Oxidationskatalysator bzw. in den SCR-Katalysator ist als 3/2-Wege-Ventil ausgebildet. Auf diese Weise kann das Reduktionsmittel wahlweise dem Oxidations- oder dem SCR-Katalysator zugeführt werden, je nachdem, welche Temperaturniveaus diese im Fahrbetrieb erreicht haben.

Die Erfindung sieht vor, dass die Umschaltvorrichtung als Mischventil ausgebildet ist. Auf diese Weise erfolgt während einer Übergangszeit eine gleichzeitige Beaufschlagung des Oxidations- und des SCR-Katalysators mit Reduktionsmittel. Mit einem solchen Mischventil wird eine abrupte Umschaltung vermieden, so dass je nach erreichten Betriebstemperaturen der Katalysatoren eine optimale Reinigungswirkung erzielt werden kann.

Die Umschaltvorrichtung ist vorzugsweise temperaturgesteuert, sodass während einer Kaltstartphase mit noch niedrigen Abgastemperaturen der Oxidationskatalysator und nach einer Warmlaufphase der SCR-Katalysator mit Reduktionsmittel beaufschlagt werden kann.

Die Zuführeinrichtung umfasst vorzugsweise jeweils eine Dosiervorrichtung zur Mengendosierung sowie Düsen zur Verteilung bzw. Zerstäubung des Reduktionsmittels im Abgasstrom.

Vorzugsweise ist der wenigstens eine Oxidationskatalysator in unmittelbarer Nähe eines Abgasauslasses der Brennkraftmaschine angeordnet, so dass er bereits nach kurzer Zeit relativ hohe Temperaturen und somit eine hohe Reinigungswirkung erreicht.

Als Reduktionsmittel kommt beispielsweise eine ammoniakhaltige bzw. ammoniakfreisetzende Substanz in Frage, die eine NOₓ-Reduktion bewirken kann. Als solche Substanz kommt bspw. Harnstoff oder Ammoniumcarbamat in Frage.

Bei einem erfindungsgemäßen Verfahren zur Reinigung von Abgasen einer Brennkraftmaschine, bei dem ein Abgasstrom durch wenigstens einen im Abgaskanal angeordneten Oxidationskatalysator und einer diesem nachgeschalteten Vorrichtung zur selektiven katalytischen Reduktion (SCR-Katalysator) geleitet wird, wird dem Abgasstrom ein Reduktionsmittel zugeführt, welches gemäß der Erfindung dem Abgasstrom wahlweise vor dem bzw. innerhalb des wenigstens einen Oxidationskatalysators zugeführt wird. Wahlweise wird das Reduktionsmittel gleichzeitig beiden Katalysatoren oder jeweils nur einem der Katalysatoren zugeführt. Das Reduktionsmittel wird vorzugsweise mittels einer Düse verteilt bzw. zerstäubt.

Eine Ausführungsform des erfindungsgemäßen Verfahrens sieht eine temperaturgesteuerte Zuführung des Reduktionsmittels in den Oxidationskatalysator und/oder in die Vorrichtung zur selektiven katalytischen Reduktion vor.

Wird der Oxidationskatalysator mit NH₃ beaufschlagt, zeigt er bei Temperaturen unterhalb von 100 °C eine relativ ausgeprägte De-NOₓ-Aktivität. Allerdings ist das nutzbare Temperaturfenster zur NOₓ-Reduzierung relativ eng begrenzt, da oberhalb von ca. 250 °C bis 300 °C keinerlei Stickstoffreduktion mehr stattfindet, sondern eine zusätzliche Stickoxidproduktion durch eine Oxidation von NH₃. Zudem werden unter Umständen relativ hohe N₂O-Selektivitäten beobachtet. Daher ist sicherzustellen, dass der Oxidationskatalysator nur in einer Startphase (im MVEG-Test nur bis etwa 350 s) mit dem Reduktionsmittel beaufschlagt wird. Vorzugsweise wird das Reduktionsmittel in den Oxidationskatalysator bei Abgastemperaturen von weniger als ca. 150 °C bis 200 °C im Oxidationskatalysator zugeführt.

Nach einer solchen Zeitspanne hat normalerweise auch der SCR-Katalysator seine Arbeitstemperatur erreicht und die Reduktionsmitteleindüsung wird auf den SCR-Katalysator umgeschaltet. Dies kann bei Temperaturen von ca. 150 °C bis 200°C im SCR-Katalysator erfolgen. Die Reduktionsmitteldosierung auf den Oxidationskatalysator ist prinzipiell bei Betriebspunkten mit niedriger Abgastemperatur - also nicht nur beim Kaltstart - möglich und verspricht hier ein sehr effektives NOₓ-Minderungspotential, wo mit dem SCR-Katalysator eine nur unzureichende Aktivität erreicht wird. Mit einer Eindüsung vor dem Oxidationskatalysator bis zu einer Zeit von etwa 600 s ist somit eine deutliche Umsatzsteigerung des Abgasreinigungssystems zu erzielen. Ein geeigneter, sinnvoller Umschaltpunkt des temperaturgesteuerten Umschaltventils kann bei 100 bis 200 °C, vorzugsweise bei 130 bis 180°C liegen.

Eine praktische Ausführung des Systems sieht ein 3/2-Wege-Umschaltventil vor, welches in Abhängigkeit der Katalysatortemperaturen und des Motorbetriebspunktes betätigt wird. Eine solche Aufrüstung eines vorhandenen Systems ist relativ einfach und mit nur geringem Aufwand zu bewerkstelligen. Das Katalysatorsystem, die Temperatursensoren und das Dosiersystem sind bereits vorhanden, wobei diese Komponenten auch nicht modifiziert werden müssen. Lediglich das Umschaltventil und die Reduktionsmittelzuleitung vor dem Oxidationskatalysator muss nachgerüstet werden. Durch eine geeignete Dosierstrategie kann eine effektive Reduktion der Stickoxide über einen gesamten Testzyklus (MVEG-Zyklus) erreicht werden. Im MVEG-Test lässt sich eine NOₓ-Umsatzsteigerung von ca. 40% erreichen, so dass bei verminderten Rohemissionen selbst eine Erfüllung der relativ strengen US-Normen möglich ist.

Der Oxidationskatalysator kann in einer bevorzugten Ausführungsform als katalytisch beschichteter Partikelfilter ausgebildet sein. Die katalytische Beschichtung des Partikelfilters wirkt hierbei ähnlich der Beschichtung eines bekannten Oxidationskatalysators. Weiterhin kann zwischen dem Oxidationskatalysator und dem SCR-Katalysator ein separater Partikelfilter vorgesehen sein, der eine Filterung der Rußpartikel bewirkt.

Die Erfindung wird nachfolgend in bevorzugten Ausführungsbeispielen anhand der zugehörigen Zeichnungen näher erläutert. Dabei zeigt:
- Figur 1: eine schematische Darstellung einer Brennkraftmaschine mit einer Abgasnach- behandlungseinheit in einem Abgaskanal,
- Figur 2: eine schematische Darstellung der Brenn- kraftmaschine gemäß Figur 1 in einer ersten Betriebsstellung,
- Figur 3: die Brennkraftmaschine gemäß Figur 1 in einer zweiten Betriebsstellung,
- Figur 4: typische Temperaturverläufe der Kompo- nenten des Abgasreinigungssystems wäh- rend eines Testzyklus,
- Figur 5: typische NOx-Emissionswerte während ei- nes Testzyklus und
- Figur 6: ein qualitatives Diagramm zur Darstel- lung der SCR-Aktivität eines Oxidations- katalysators.

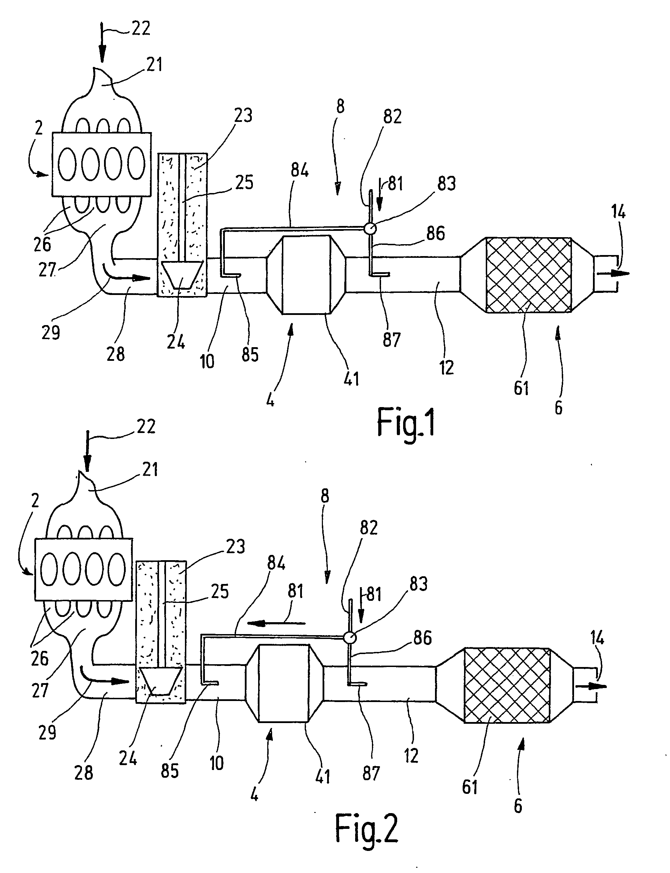

Figur 1 zeigt eine erfindungsgemäße Abgasreinigungsanlage in schematischer Darstellung. Dabei ist in einem Abgaskanal 28 einer Brennkraftmaschine 2 ein Oxidationskatalysator 4 und eine als SCR-Katalysator 6 bezeichnete Vorrichtung zur selektiven katalytischen Reduktion angeordnet. Die Brennkraftmaschine 2 weist einen Einlasskanal 21 zur Zufuhr von Frischgas 22 sowie Auslasskanäle 26 auf, die in einem Sammler 27 zum Abgaskanal 28 zusammengeführt sind. Im Abgaskanal ist eine Abgasturbine 24 eines Abgasturboladers 23 angeordnet, die über eine Welle 25 mit einem hier nicht dargestellten Verdichter gekoppelt ist. Der Abgasturbolader 23 ist optional und dient zur Verbesserung des Leistungs- und Abgasverhaltens der Brennkraftmaschine 2.

Die Brennkraftmaschine 2 ist vorzugsweise eine Diesel-Brennkraftmaschine mit Selbstzündung oder ein Benzinmotor mit Kraftstoffdirekteinspritzung. Beide Motorentypen emittieren jeweils ein relativ sauerstoffreiches Abgas. Der Abgasstrom 29 durchläuft nacheinander den Oxidationskatalysator 4 sowie den SCR-Katalysator 6 und verlässt die Abgasreinigungsanlage als gereinigtes Abgas 14, das über einen Schalldämpfer (nicht dargestellt) ins Freie geleitet wird.

Die Abgasreinigungsanlage weist weiterhin eine Zuführeinrichtung 8 zur Zuführung eines Reduktionsmittels 81 in den Abgasstrom 29 auf. Die Zuführeinrichtung 8 umfasst eine Umschalteinrichtung 83 sowie eine mit einer ersten Düse 85 in Verbindung stehende erste Verbindungsleitung 84 und eine mit einer zweiten Düse 87 in Verbindung stehende zweite Verbindungsleitung 86. Die erste Düse 85 ist im Abgaskanal 28 stromaufwärts des Oxidationskatalysators 4 angeordnet und dient zur feinen Verteilung bzw. Zerstäubung des Reduktionsmittels 81 vor dem Oxidationskatalysator 4. Die zweite Düse 87 ist stromaufwärts des SCR-Katalysators 6 und stromabwärts des Oxidationskatalysators 4 angeordnet und dient zur Zuführung von Reduktionsmittel 81 in den Abgasstrom 29 vor den SCR-Katalysator 6.

Erste und zweite Verbindungsleitungen 84, 86 müden in der Umschalteinrichtung 83, die für eine wahlweise Verteilung des Reduktionsmittels auf die erste und/oder zweite Verbindungsleitung 84, 86 sorgen kann. Die Steuerung der Umschaltvorrichtung 83 erfolgt vorzugsweise temperaturabhängig, sodass in einer Kaltlaufphase der Oxidationskatalysator 4 und nach Erreichen einer bestimmten Temperatur der SCR-Katalysator 6 mit Reduktionsmittel 81 beaufschlagt werden kann.

Figur 2 verdeutlicht die Kaltlaufphase der Abgasreinigungsanlage, bei der lediglich die erste Düse 85 mit Reduktionsmittel beaufschlagt wird. Dies wird verdeutlicht durch den Pfeil 81 entlang der ersten Verbindungsleitung 84.

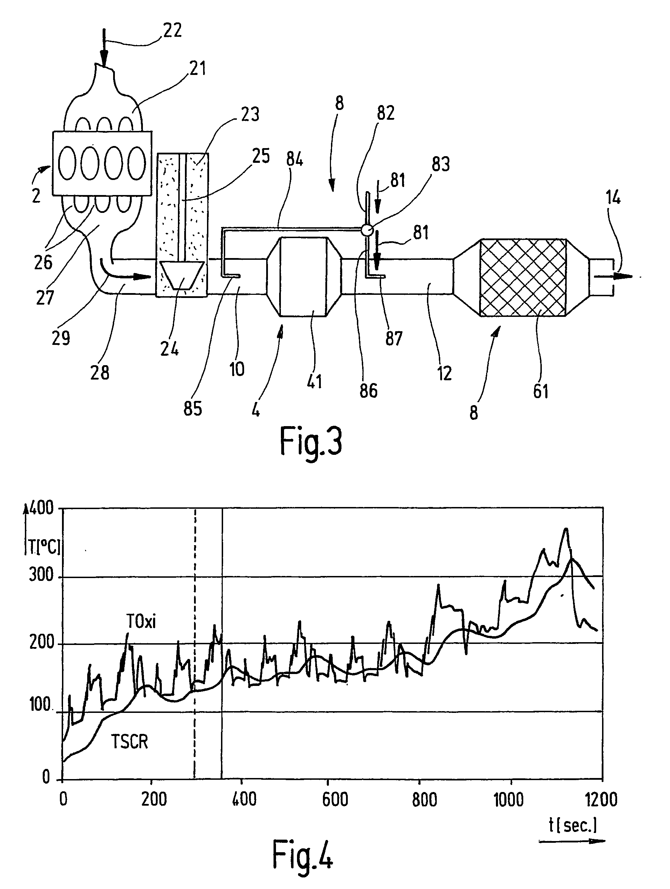

Figur 3 verdeutlicht die nachfolgende Phase, bei der die Katalysatoren bereits eine vorbestimmte Betriebstemperatur erreicht haben. Hierbei wird die zweite Verbindungsleitung 86 und die zweite Düse 87 mit Reduktionsmittel 81 beaufschlagt. Dies ist durch den Pfeil 81 entlang der zweiten Verbindungsleitung 86 verdeutlicht.

Eine typische Übergangstemperatur kann bei ca. 100 °C bis 200°C, vorzugsweise ungefähr bei 130 bis 180°C liegen, oberhalb derer eine Umschaltung auf die Beaufschlagung des SCR-Katalysators 6 mit Reduktionsmittel 81 erfolgen kann. Eine Umschaltung erfolgt mittels eines Mischventils, das für eine gleichzeitige Beaufschlagung des Oxidationskatalysators 4 sowie des SCR-Katalysators 6 im Bereich der Übergangstemperatur sorgt.

Der Oxidationskatalysator 4 kann in einer alternativen Ausgestaltung ein katalytisch beschichteter Partikelfilter sein, der aufgrund seiner katalytischen Beschichtung eine gleiche Wirkung aufweist wie ein bekannter Oxidationskatalysator. Zusätzlich zur gezeigten Konfiguration kann zwischen dem Oxidationskatalysator 4 und dem SCR-Katalysator 6 ein separater Partikelfilter angeordnet sein. Dieser bewirkt eine nochmalige Verbesserung der Reinigungswirkung der Abgase.

Figur 4 verdeutlicht typische Temperaturverläufe des Oxidations- und des SCR-Katalysators während eines genormten Testzyklus. Als Testzyklus wird im folgenden beispielhaft auf den sogenannten MVEG-Test Bezug genommen. Auf der horizontalen Achse ist die Zeit in Sekunden und auf der vertikalen Achse die Temperatur in °C aufgetragen. Es wird deutlich, dass der Oxidationskatalysator (obere gezackte Kurve) nach einer Zeit von ca. 150 Sekunden bereits Temperaturen von bis zu 200°C erreichen kann. Die Temperatur des SCR-Katalysators (untere gewellte Kurve) liegt nach 300 Sekunden noch deutlich unter 150 °C. Eine Zuführung von Reduktionsmittel führt bei diesen Temperaturbereichen im SCR-Katalysator noch nicht zu befriedigenden Reduktionsergebnissen von NOₓ. Da der Oxidationskatalysator bereits nach wenigen Sekunden auf Temperaturen von über 100 °C kommt, kann durch eine Zuführung von Reduktionsmittel vor bzw. in den Oxidationskatalysator bereits eine gute NOₓ-Reduktion erreicht werden. Die gestrichelte senkrechte Linie bei ca. 300 Sekunden stellt den frühest sinnvollen Zeitpunkt für den Beginn der NH₃-Eindüsung vor dem SCR-Katalysator dar. Die durchgezogene senkrechte Linie bei ca. 350 Sekunden stellt den Beginn der wirksamen NOₓ-Reduktion durch den SCR-Katalysator im MVEG-Testzyklus dar.

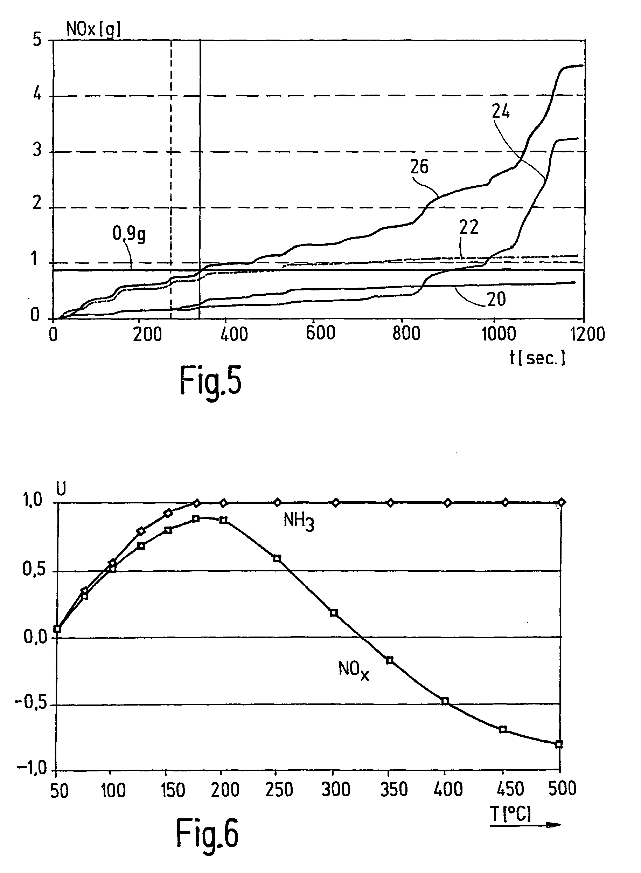

Die Figur 5 verdeutlicht die kumulierte Emission von NOₓ bei verschiedenen Systemen der Abgasreinigung über der Zeit. Auf der horizontalen Achse ist die Zeit in Sekunden und auf der vertikalen Achse die kumulierte Menge an emittierten NOₓ dargestellt. Es wird deutlich, dass mit einer Eindüsung von Reduktionsmittel vor dem Oxidationskatalysator und im SCR-Katalysator gemäß der Erfindung die Emissionen von NOₓ deutlich reduziert werden können.

Die unterste Kurve 20 verdeutlicht, dass nur mit dem erfindungsgemäßen System der MVEG-Grenzwert von 0,9 g NOₓ erfüllt werden kann. Die darüber verlaufende unterbrochene Kurve 22 charakterisiert den Verlauf der NOₓ-Emissionen bei einem herkömmlichen System aus hintereinander angeordnetem Oxidations- und SCR-Katalysator (sog. herkömmliches VR-System ohne Umschaltung). Die Kurve 24 verdeutlicht die Emissionen eines Systems, das lediglich eine Zuführung von Reduktionsmittel vor dem Oxidationskatalysator vorsieht. Zunächst erfolgt eine gute Reduktion, wogegen die erhöhten Temperaturen ab ca. 800 Sekunden die effektive NOₓ-Reduzierung verhindern. Ab diesem Zeitpunkt steigen die NOₓ-Emissionen steil an und nähern sich sogar den Werten der Rohemissionen (Kurve 26), da ab ca. 300 bis 350 °C eine zusätzliche NOₓ-Menge erzeugt wird.

Figur 6 verdeutlicht die NOₓ-reduzierende Wirkung des Oxidationskatalysators über die Temperatur. Es wird deutlich, dass ab einer Temperatur von ca. 200°C die NOₓ-Reduktion deutlich absinkt und ab Temperaturen von ca. 350°C sogar zusätzlich NOₓ produziert wird. Auf der horizontalen Achse ist die Temperatur und auf der vertikalen Achse der Umsatz dargestellt. Es wird deutlich, dass der Umsatz an NOₓ ab einer gewissen Temperatur (ca. 200 °C) deutlich abfällt. Dies ist der Grund, weshalb nach der Kaltlaufphase die Zuführung von Reduktionsmittel vor dem Oxidationskatalysator abgeschaltet werden muss und nur noch vor dem SCR-Katalysator Reduktionsmittel zugeführt werden kann.

## Patentansprüche

1. Abgasreinigungsanlage zur Reinigung des Abgases einer Brenn-kraftmaschine, insbesondere einer Brennkraftmaschine mit Selbstzündung und/oder mit Kraftstoffdirekteinspritzung, mit wenigstens einem in einem Abgaskanal der Brennkraftmaschine angeordneten Oxidationskatalysator, mit wenigstens einer diesem nachgeordneten Vorrichtung zur selektiven katalytischen Reduktion der Abgase und mit einer Zuführvorrichtung zur Zuführung von Reduktionsmittel in den Abgasstrom vor der beziehungsweise in die Vorrichtung zur selektiven katalytischen Reduktion und einer Umschaltvorrichtung (83) zur wahlweisen Zuführung von Reduktionsmittel (81) in den Abgasstrom (29) vor dem beziehungsweise innerhalb des wenigstens einen Oxidationskatalysators (4), **dadurch gekennzeichnet, dass** die Umschaltvorrichtung (83) als 3/2-Wege-Mischventil ausgebildet ist.

2. Abgasreinigungsanlage nach Anspruch 1, **dadurch gekennzeichnet, dass** die Umschaltvorrichtung (83) temperaturgesteuert ist.

3. Abgasreinigungsanlage nach einem der vorhergehenden Ansprüche, **dadurch gekennzeichnet, dass** die Zuführeinrichtung (8) ' jeweils eine Dosiervorrichtung und Düsen (85,87) zur Verteilung bzw. Zerstäubung des Reduktionsmittels (81) im Abgasstrom (29) aufweist.

4. Abgasreinigungsanlage nach einem der vorhergehenden Ansprüche, **dadurch gekennzeichnet, dass** der wenigstens eine Oxidationskatalysator (4) in unmittelbarer Nähe eines Abgasauslasses (26) der Brennkraftmaschine (2) angeordnet ist.

5. Abgasreinigungsanlage nach einem der vorhergehenden Ansprüche, **dadurch gekennzeichnet, dass** der wenigstens eine Oxidationskatalysator (4) ein katalytisch beschichteter Partikelfilter ist.

6. Abgasreinigungsanlage nach einem der vorhergehenden Ansprüche, **dadurch gekennzeichnet, dass** zwischen dem wenigstens einen Oxidationskatalysator (4) und der wenigstens einen Vorrichtung zur selektiven katalytischen Reduktion wenigstens ein Partikelfilter vorgesehen ist.

7. Verfahren zur Reinigung von Abgasen einer Brennkraftmaschine, insbesondere einer Brennkraftmaschine mit Selbstzündung und/oder mit Kraftstoffdirekteinspritzung, bei dem ein Abgasstrom durch wenigstens einen im Abgaskanal angeordneten Oxidationskatalysator und wenigstens eine, diesem nachgeordnete Vorrichtung zur selektiven katalytischen Reduktion geleitet wird, bei der dem Abgasstrom vor der beziehungsweise in die Vorrichtung zur selektiven katalytischen Reduktion ein Reduktionsmittel zugeführt wird, wobei dem Abgasstrom (29) das Reduktionsmittel (81) wahlweise vor dem beziehungsweise innerhalb des wenigstens einen Oxidationskatalysators (4) zugeführt wird, wozu ein 3/2-Wege-Mischventil vorgesehen ist

8. Verfahren nach Anspruch 7, **gekennzeichnet durch** eine Zuführung des Reduktionsmittels (81) in den Oxidationskatalysator (4) oder in die Vorrichtung zur selektiven katalytischen Reduktion (6).

9. Verfahren nach Anspruch 7, **gekennzeichnet durch** eine gleichzeitige Zuführung von Reduktionsmittel (81) in den Oxidationskatalysator (4) und in die Vorrichtung zur selektiven katalytischen Reduktion (6) während einer Übergangszeit.

10. Verfahren nach einem der Ansprüche 7 bis 9, **gekennzeichnet durch** eine Zuführung und/oder Zerstäubung des Reduktionsmittels (81) mittels Düse (85,87).

11. Verfahren nach einem der Ansprüche 7 bis 10, **gekennzeichnet durch** eine temperaturgesteuerte Zuführung des Reduktionsmittels (81) in den Oxidationskatalysator (4) und/oder in die Vorrichtung zur selektiven katalytischen Reduktion (6).

12. Verfahren nach einem der Ansprüche 7 bis 11, **gekennzeichnet durch** eine temperaturgesteuerte Zuführung des Reduktionsmittels (81) in den Oxidationskatalysator (4) bei Abgastemperaturen von weniger als ca. 150 bis 200 °C, insbesondere von weniger als ca. 180 °C im Oxidationskatalysator (4).

13. Verfahren nach einem der Ansprüche 7 bis 12, **gekennzeichnet durch** eine temperaturgesteuerte Zuführung des Reduktionsmittels (81) in die Vorrichtung zur selektiven katalytischen Reduktion (6) bei Abgastemperaturen von mehr als ca. 150 bis 200 °C, insbesondere von mehr als ca. 180 °C in der Vorrichtung zur selektiven katalytischen Reduktion.

## Claims

1. Exhaust gas purification system for purifying the exhaust gas from an internal combustion engine, in particular an internal combustion engine with compression ignition and/or with direct injection of fuel, having at least one oxidation catalytic converter arranged in an exhaust gas duct of the internal combustion engine, having at least one apparatus for the selective catalytic reduction of the exhaust gases, said apparatus being arranged downstream of the oxidation catalytic converter, and having a feed device for feeding reducing agent into the exhaust gas stream upstream of or into the apparatus for the selective catalytic reduction, and having a changeover device (83) for optionally feeding reducing agent (81) into the exhaust gas stream (29) upstream of or within the at least one oxidation catalytic converter (4), **characterized in that** the changeover device (83) is designed as a 3/2-way mixing valve.

2. Exhaust gas purification system according to Claim 1, **characterized in that** the changeover device (83) is temperature controlled.

3. Exhaust gas purification system according to one of the preceding claims, **characterized in that** the feed device (8) in each case has a metering device and nozzles (85, 87) for distributing or atomizing the reducing agent (81) in the exhaust gas stream (29).

4. Exhaust gas purification system according to one of the preceding claims, **characterized in that** the at least one oxidation catalytic converter (4) is arranged in the direct vicinity of an exhaust gas outlet (26) of the internal combustion engine (2).

5. Exhaust gas purification system according to one of the preceding claims, **characterized in that** the at least one oxidation catalytic converter (4) is a catalytically coated particle filter.

6. Exhaust gas purification system according to one of the preceding claims, **characterized in that** at least one particle filter is provided between the at least one oxidation catalytic converter (4) and the at least one apparatus for the selective catalytic reduction.

7. Method for purifying the exhaust gases from an internal combustion engine, in particular an internal combustion engine with compression ignition and/or with direct injection of fuel, in which an exhaust gas stream is passed through at least one oxidation catalytic converter arranged in the exhaust gas duct and at least one apparatus for the selective catalytic reduction, which apparatus is arranged downstream of the oxidation catalytic converter, in which apparatus a reducing agent is fed to the exhaust gas stream upstream of or into the apparatus for the selective catalytic reduction, wherein the reducing agent (81) is supplied to the exhaust gas stream (29) optionally upstream of or within the at least one oxidation catalytic converter (4), for which purpose a 3/2-way mixing valve is provided.

8. Method according to Claim 7, **characterized by** feeding of the reducing agent (81) into the oxidation catalytic converter (4) or into the apparatus for the selective catalytic reduction (6).

9. Method according to Claim 7, **characterized by** simultaneous feeding of reducing agent (81) into the oxidation catalytic converter (4) and into the apparatus for the selective catalytic reduction (6) during a transition period.

10. Method according to one of Claims 7 to 9, **characterized by** feeding and/or atomization of the reducing agent (81) by means of a nozzle (85, 87).

11. Method according to one of Claims 7 to 10, **characterized by** a temperature-controlled feeding of the reducing agent (81) into the oxidation catalytic converter (4) and/or into the apparatus for the selective catalytic reduction (6).

12. Method according to one of Claims 7 to 11, **characterized by** a temperature-controlled feeding of the reducing agent (81) into the oxidation catalytic converter (4) at exhaust gas temperatures of less than approx. 150 to 200°C, in particular of less than approx. 180°C in the oxidation catalytic converter (4).

13. Method according to one of claims 7 to 12, **characterized by** a temperature-controlled feeding of the reducing agent (81) into the apparatus for the selective catalytic reduction (6) at exhaust gas temperatures of more than approx. 150 to 200°C, in particular of more than approx. 180°C in the apparatus for the selective catalytic reduction.

## Revendications

1. Installation d'épuration de gaz d'échappement pour purifier les gaz d'échappement d'un moteur à combustion interne, notamment d'un moteur à combustion interne à autoallumage et/ou à injection directe de carburant, comprenant au moins un catalyseur d'oxydation disposé dans un conduit de gaz d'échappement du moteur à combustion interne, au moins un dispositif monté en aval pour la réduction catalytique sélective des gaz d'échappement et un dispositif d'alimentation pour l'alimentation en agent réducteur dans le flux de gaz d'échappement devant ou dans le dispositif pour la réduction catalytique et un dispositif d'inversion (83) pour l'alimentation sélective d'agent réducteur (81) dans le flux de gaz d'échappement (29) devant ou dans l'au moins un catalyseur d'oxydation (4), **caractérisée en ce que** le dispositif d'inversion (83) est réalisé sous forme de soupape de mélange à 3/2 voies.

2. Installation d'épuration de gaz d'échappement selon la revendication 1, **caractérisée en ce que** le dispositif d'inversion (83) est commandé par la température.

3. Installation d'épuration de gaz d'échappement selon l'une quelconque des revendications précédentes, **caractérisée en ce que** le dispositif d'alimentation (8) présente à chaque fois un dispositif de dosage et des buses (85, 87) pour la distribution ou la pulvérisation de l'agent réducteur (81) dans le flux de gaz d'échappement (29).

4. Installation d'épuration de gaz d'échappement selon l'une quelconque des revendications précédentes, **caractérisée en ce que** l'au moins un catalyseur d'oxydation (4) est disposé à proximité immédiate d'une sortie de gaz d'échappement (26) du moteur à combustion interne (2).

5. Installation d'épuration de gaz d'échappement selon l'une quelconque des revendications précédentes, **caractérisée en ce que** l'au moins un catalyseur d'oxydation (4) est un filtre à particules à revêtement catalytique.

6. Installation d'épuration de gaz d'échappement selon l'une quelconque des revendications précédentes, **caractérisée en ce que** l'on prévoit entre l'au moins un catalyseur d'oxydation (4) et l'au moins un dispositif pour la réduction catalytique sélective, au moins un filtre à particules.

7. Procédé pour l'épuration de gaz d'échappement d'un moteur à combustion interne, notamment d'un moteur à combustion interne à autoallumage et/ou à injection directe de carburant, dans lequel un flux de gaz d'échappement est guidé à travers au moins un catalyseur d'oxydation disposé dans le conduit de gaz d'échappement et au moins un dispositif monté en aval, pour la réduction catalytique sélective, un agent réducteur étant acheminé au flux de gaz d'échappement devant ou dans le dispositif pour la réduction catalytique sélective, l'agent réducteur (81) étant acheminé au flux de gaz d'échappement (29) de manière sélective devant ou dans l'au moins un catalyseur d'oxydation (4), une soupape de mélange à 3/2 voies étant prévue à cet effet.

8. Procédé selon la revendication 7, **caractérisé par** une alimentation en agent réducteur (81) dans le catalyseur d'oxydation (4) ou dans le dispositif pour la réduction catalytique sélective (6).

9. Procédé selon la revendication 7, **caractérisé par** une alimentation simultanée en agent réducteur (81) dans le catalyseur d'oxydation (4) et dans le dispositif pour la réduction catalytique sélective (6) pendant un temps de transition.

10. Procédé selon l'une quelconque des revendications 7 à 9, **caractérisé par** une alimentation et/ou une pulvérisation de l'agent réducteur (81) au moyen de buses (85, 87).

11. Procédé selon l'une quelconque des revendications 7 à 10, **caractérisé par** une alimentation commandée en température de l'agent réducteur (81) dans le catalyseur d'oxydation (4) et/ou dans le dispositif pour la réduction catalytique sélective (6).

12. Procédé selon l'une quelconque des revendications 7 à 11, **caractérisé par** une alimentation commandée en température de l'agent réducteur (81) dans le catalyseur d'oxydation (4) pour des températures de gaz d'échappement inférieures à environ 150 à 200°C, notamment inférieures à environ 180°C dans le catalyseur d'oxydation (4).

13. Procédé selon l'une quelconque des revendications 7 à 12, **caractérisé par** une alimentation commandée en température de l'agent réducteur (81) dans le dispositif pour la réduction catalytique sélective (6) pour des températures de gaz d'échappement supérieures à environ 150 à 200°C, notamment supérieures à environ 180°C dans le dispositif pour la réduction catalytique sélective.
